# EUROPEAN PATENT APPLICATION

(11) **EP 0 935 242 A1**
(43) Date of publication of application: **11.08.1999**
(21) Application number: 98938918.4
(22) Date of filing: 21.08.1998
(51) Int. Cl.: G11B 7/24

(54) **OPTICAL DISC TYPE RECORDING MEDIUM**

(30) Priority: 22.08.1997 JP 22670197
(71) Applicant: SEGA ENTERPRISES, LTD., Tokyo 144-8531 (JP)
(72) Inventor: NAKAYAMA, Madoka, Sega Enterprises, Ltd., Tokyo 144-8531 (JP); MATSUBARA, Taku, Sega Enterprises, Ltd., Tokyo 144-8531 (JP); NAKAMURA, Yoshifumi, Sega Enterprises, Ltd., Tokyo 144-8531 (JP)
(74) Representative: Billington, Lawrence Emlyn
(86) International application number: JP9803698
(87) International publication number: WO9910884

(57) **Abstract**

An optical disk type storage media that increases storage capacity and increases security control capability for stored program data is disclosed. The concerned optical disk type storage media has a first storage area, second storage area, and third storage area between the aforementioned first and second storage areas, all of which have different storage densities. Storage is performed with a constant line velocity for the aforementioned first storage area and second storage area, and storage is performed with a constant angle velocity for the third storage area. Also, the aforementioned second storage area is placed on the outermost periphery in the radial direction, and program data is stored in at least the outermost area of the aforementioned second storage area.

## Description

### BACKGROUND OF THE INVENTION

### 1. Technical Field

The present invention relates to optical disk type memory media. Specifically, it relates to optical disk type storage media that may increase storage capacity and that may increase the security control capability for stored program data.

### 2. Description of the Related Art

Optical disk type storage media, which includes compact disk-memory (CD-ROM) is widely popular. Optical disk type storage media that store digital signals are also used as secondary storage media for information processing devices.

CD-ROMs also store game programs to be run for video game devices, etc., and are used as a program sales medium. Here, the generally used CD-ROM is read-only memory with data storage capacity of 650 MB.

On the other hand, along with recent CPUs and the acceleration of image processing peripheral equipment, the size of the programs to be run is increasing. Because of this, when storing a program that is larger than the storage capacity of one CD-ROM, it is necessary to store the program spread over multiple CD-ROMs.

With a suitable compression technology, it is also possible to compress large size program data to store to a CD-ROM.

However, with the aforementioned condition, when storing one program into multiple CD-ROMS, to execute the program efficiently, playback devices that can sequentially load multiple disks are needed. Furthermore, when using compression technology to compress and store program data, it is necessary to decompress the program to read it. This puts a greater burden on the CPU.

Taking program security issues into consideration, security codes are used to make a program inoperable when someone copies a program illegally.

In other words, when storing program data on a CD-ROM, a security code is stored on the outer periphery area of the disk. When the program is run, the security code is read, a comparison is made with the corresponding security code held by the main device, and when a match is confirmed, the program can be executed.

In such a case, the outer peripheral area of a CD-ROM that stores the security code is taken, this is linked to the program storage area part of another CD-ROM on which the illegally copied program is stored, making possible such illicit activity as obtaining a tampered with CD-ROM.

In this case, even with a tampered with CD-ROM created illegally, since it has the security code, it is logically possible to execute an illegally copied program.

### SUMMARY OF THE INVENTION

Therefore, considering the various points noted above, an object of this invention is to provide an optical disk type storage medium with greater storage capacity.

Another object of this invention is to provide an optical disk type storage medium with higher assurance of security by making it harder to tamper with the disk.

The optical disk type storage medium that solves the aforementioned tasks of this invention has multiple physical format areas in the radial direction, and has a physical format of another physical format area that differs from the physical format of the innermost periphery physical format.

As one embodiment, the aforementioned physical format is a storage density, where the innermost physical format area storage density is single density, and other physical format areas have a greater storage density than this.

Further, as another embodiment, for the aforementioned situation, security data is stored on a third physical format area that exists between the innermost physical format area and the outermost physical format area.

Furthermore, as a specific example, the security data stored in the aforementioned third physical format area is related to the data stored in the innermost physical format area and to the data stored in the outermost physical format area.

As another specific example, the security data stored in the aforementioned third physical format area has different contents for each program title stored in the outermost physical format area.

As yet another example, the aforementioned third physical format area is kept adjacent to the aforementioned innermost physical format area, track information for accessing another physical format area is encrypted and stored in said innermost physical format area, and key information for decoding this encryption is stored in the aforementioned third physical format area.

As yet another example, of the aforementioned multiple physical format areas, except for the innermost physical format area, at least one physical format area is a storage area for which write and read are possible.

As a concrete example of this embodiment, the aforementioned storage area for which write and read are possible is formed from an opto-magnetic storage memory medium.

As another form of this invention, the medium has a first and second storage area with differing storage densities as well as a third storage area between these first and second storage areas. Then, for the aforementioned first and second storage areas, storage is performed at a constant line velocity, and for the aforementioned third storage area, storage is performed at a constant angle velocity.

As one embodiment for the aforementioned example, the aforementioned second storage area is placed in the outermost periphery in a radial direction, and program data is stored at least in the outermost peripheral area of the second storage area.

As another embodiment, the pit length on the outermost track in the radial direction of the aforementioned third storage area and the pit length on the innermost track in the radial direction of the third storage area are set so that the read times are the same.

Yet another embodiment is characterized by the aforementioned first storage area being placed on the innermost edge in the radial direction, the aforementioned second storage area being placed on the outermost edge in the radial direction, and the storage density of the second storage area being greater than the storage density of the first storage area.

This is also characterized by the same security code being stored in the aforementioned first storage area and the aforementioned second storage area:

Yet another embodiment is characterized by the aforementioned third storage area having a visible pattern formed with multiple logic "1" bits.

Further tasks and characteristics of this invention will be made clear from preferred embodiments of the invention explained while referring to the following figures.

### BRIEF DESCRIPTION OF THE DRAWINGS

Figure 1 is a diagram that shows the optical disk type storage medium of a preferred embodiment of this invention.
Figure 2 is a summary diagram of a personal computer system or video game device that uses a CD-ROM program supply medium as a disk type storage medium according to this invention.
Figure 3 is a block diagram of a structural example of CD-ROM playback device 7.
Figure 4 is a flow chart that explains an example of operation using a disk type storage medium of this invention.
Figure 5 is a diagram that explains the security effect of this invention.
Figure 6 is a diagram that shows an optical disk type storage medium as another preferred embodiment of this invention.
Figure 7 is a diagram that shows another preferred embodiment of this invention that takes into consideration a further increase in security effect as well as high density data storage.
Figure 8 is a diagram that shows pit 10 on innermost track IL and pit 10b on the outermost track OL of the constant angle velocity (CAV) area.
Figure 9 is a diagram that explains cells that display a logo mark such as the registered trademark by pits stored by the related constant angle velocity (CAV) on the third storage area Vol. 3 (area B).
Figure 10 is a diagram that explains an example of the structure of a logo mark made by multiple cells.
Figure 11 shows the operation flow of the security check of this invention based on the structure shown in figure 7.
Figure 12 is a diagram that explains a CD-ROM with only single density storage areas.

### DESCRIPTION OF THE PREFERRED EMBODIMENTS

Following, we will explain preferred embodiments of this invention while referring to the figures. In the figures, the same or similar items are marked by the same reference number or symbol.

In the following explanation of preferred embodiments, we explain an example of a CD-ROM, but this invention is not limited to this, and the invention can be used for any optical disk type storage media. Here, before explaining preferred embodiments of the invention, for understanding the characteristics of this invention, we will explain optical disk type storage media. Optical disk type storage media include read only types, appendable (one time only write possible) types, and rewritable types.

For all of these, a substrate is formed using polycarbonate, etc. as a material, and an Al film is formed as a reflective layer on this substrate. With read only type CD-ROMS, a laser beam is irradiated on this Al layer according to digital data "1" and "0," the form is changed, and the reflectance rate is changed. This allows fixed write of digital data to the CD-ROM.

On the other hand, with the appendable type, a pigment layer is formed in front of the Al layer which is the aforementioned reflective layer, and write is performed by deforming the pigment resolution and substrate shape using a laser beam. Therefore, write is possible only once, and examples of this include CD-R and DVD-R.

As a rewritable type, there is the opto-magnetic (MO) type that has a magnetic storage layer formed using rare earth transition metals and which performs storage by use of laser light and external magnetic fields on the storage layer. There is also a phase change (PD) type for which a film is formed before the Al layer as a reflective layer using a material such as a Te alloy, and laser spot light is irradiated on this film to change from a non-crystal type layer to a crystal type layer.

For any of the aforementioned optical disk type storage media, read is performed using laser light irradiation. Bits "1" and "0" are read by the phase difference in the reflection rate of written bits and non-written bits, or by polarization of reflected light.

In terms of increasing storage capacity, this invention can be applied to any of the aforementioned types of optical disk type storage media including read-only type, appendable type, and rewritable type, and in terms of increasing security, it can be applied in particular to the aforementioned read-only type and appendable type.

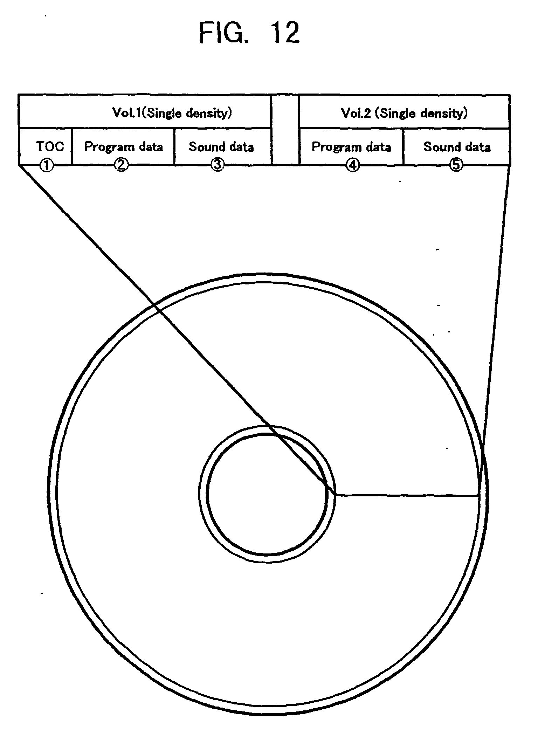

Figure 12 is a diagram that explains the aforementioned CD-ROM, where a 12 cm diameter disk is formed, and as described above, an Al layer is formed on a polycarbonate substrate. As the format of the stored data, the placement information of the data in the disk is stored in the TOC (Table Of Contents). There are also multiple volumes stored facing the outside.

With the example shown in figure 12, assuming this is a game program, there are two volumes, Vol. 1 and Vol. 2, and on these are stored game program data and program related sound data.

Read processing is performed from the innermost periphery of the disk, and TOC information ① is read first. This TOC information ① includes information such as placement position information of data in the disk.

Therefore, access to the placement positions (addresses) of the necessary program digital data ② and ④ is performed using this placement information, and the program data is read.

Reading of program data is executed by the CPU of the video game main device which is not illustrated. At this time, based on the same TOC information, access is made to the storage position of sound data ③ and ⑤,and sound data is read. Therefore, read sound data is synchronized with program execution, making it possible to output this as background music, for example.

Here, storage density is one definition of the physical format of the CD-ROM shown in figure 12. As mentioned earlier, general use CD-ROMS have data storage capacity of 650 MB.

Therefore, storage density when storing 650 MB of data capacity to a 12 cm disk will be defined as normal density or single density for this invention.

In other words, for the conventional CD-ROM disk shown in figure 12, data storage is performed at single density for the whole area.

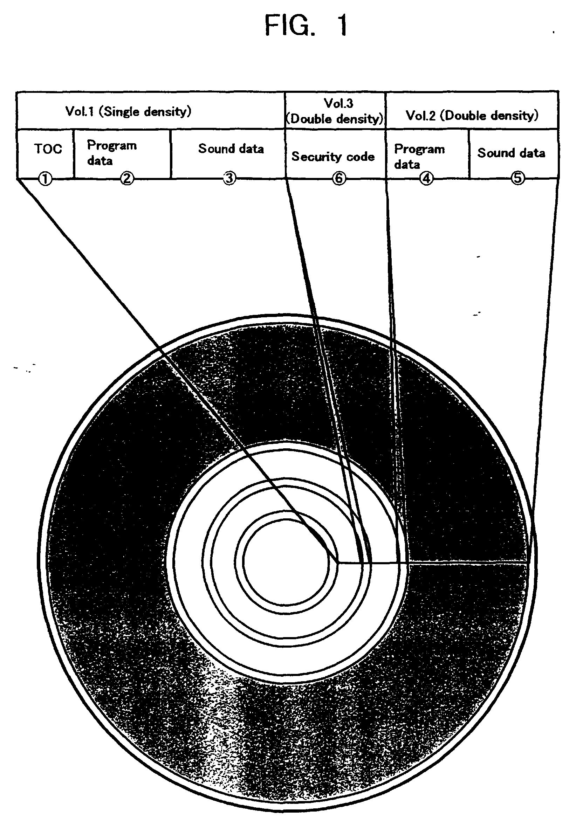

Figure 1 is a diagram showing an optical disk type storage medium as a preferred embodiment of this invention to be compared with figure 12.

The optical disk type storage medium shown in figure 1 has the same basic structure as a conventional CD-ROM, with polycarbonate as the substrate and an Al film formed on this as a reflective layer.

The difference with figure 12 is that there are multiple different physical formats. In other words, with the preferred embodiment shown in figure I , there are areas with two types of storage density, one being a single density storage area, and the other being a larger density storage area, double in the case of the preferred embodiment.

In single density storage area Vol. 1, TOC ① and data (program data ②, sound data ③) are stored. In double density area Vol. 2, data (program data ④, sound data ⑤) is stored, and in the same way, in double density area Vol. 3, security code ⑥ is stored.

For the preferred embodiment, single density storage area Vol. 1 has 35 MB of storage capacity while double density areas Vol. 2 and 3 have a total of 1 GB of storage capacity.

Here, it is possible to have the storage density differ according to signal processing such as format structure and modulation method or by beam spot size based on laser light wavelength, etc.

Also, the aforementioned security code ⑥ is stored in double density area Vol. 3, and in the same manner, is placed on the inner side of the data stored in double density area Vol. 2 (program data ④, sound data ⑤).

In other words, with this invention, security code ⑥ storage area Vol. 3 is placed not in the outer periphery area of the optical disk storage medium but rather between single density storage area Vol. 1 that contains the TOC area and double density data storage area (program data ④ , sound data ⑤) Vol. 2.

Thus, it becomes difficult to take out from the disk storage area Vol. 3 that contains security code ⑥ and combine it with the part of a disk that stores an illegally copied program to obtain a tampered-with disk type storage medium.

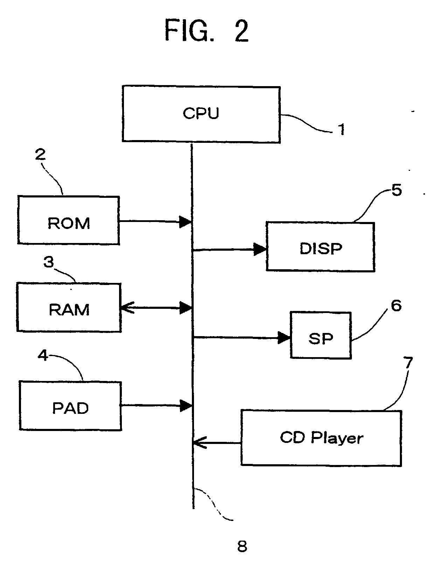

Figure 2 is a summary diagram of a personal computer system or video game device that uses a disk type storage medium according to this invention as a CD-ROM for the program supply medium.

Through bus 8, CPU 1, BOOT-ROM 2, main memory 3, input pad 4, display device 5, speaker 6, and a CD-ROM installed as a disk type storage medium according to this invention are connected to CD-ROM playback device 7.

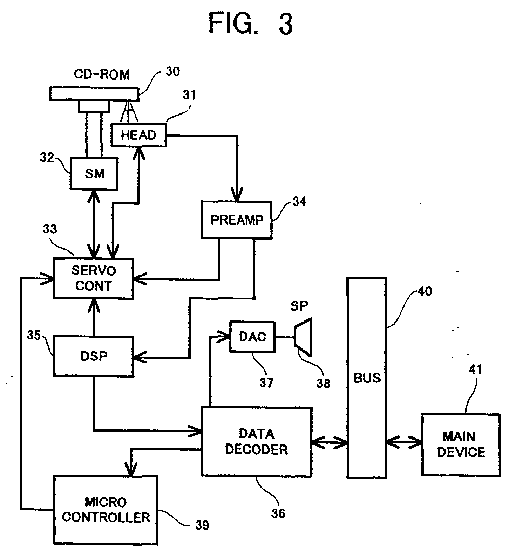

Figure 3 is a block diagram of a structural example of CD-ROM playback device 7. In figure 3, at a specified storage position of CD-ROM 30 as the disk type storage medium according to this invention, to access read head 31, servo control is performed on rotation by spindle motor 32 and radial movement of read head 31.

Servo control of the rotation of spindle motor 32 and radial movement of read head 31 is performed by servo control circuit 33. Signals read by read head 31 are amplified by preamp 34 and input to servo control circuit 33 and DSP (digital signal processor) 35.

A focus signal and tracking signal are sent from preamp 34 to servo control circuit 33. Based on these signals, servo -control circuit 33 controls the focus of the laser light of read head 31 and controls tracking orbit corrections.

Read data signals are input from preamp 34 to DSP 35. Read data signals are modulation signals such as EFM (Eight to Fourteen Modulation). Therefore, DSP 35 performs a process of converting the read signal to a baseband signal.

The converted baseband signal is sent from DSP 35 to data decoder circuit 36. A synchronous signal is replayed at DSP 35, this is sent to servo control circuit 33, and control is performed to make the rotation of spindle motor 32 constant.

Data decoder circuit 36 is formed from microcomputer, memory, and interface circuits that are not shown in the figure, and the circuit decodes baseband signals sent from DSP 35. Decoded sound signals are converted to sound signals by D/A converter circuit 37 and output through speaker 38.

With the preferred embodiment of this invention, data decoder circuit 36 sends to microcontroller 39, data position information read from TOC ① on single density area Vol. 1, and the microcontroller 39 sends a command to the servo control circuit 33 so that access control is performed by servo control circuit 33 for specific data of area Vol. 1.

Also, data decoder circuit 36 reads stored data of double density areas Vol. 2 and 3 according to physical format information of double density areas Vol. 2 and 3, in other words storage density information, as a preferred embodiment of a high density area obtained from specific data stored in single density area Vol. 1. To do this, servo control circuit 33 receives commands from microcontroller 39 so as to control rotation speed of spindle motor 32 and movement pitch of read head 31 according to the data from data decoder circuit 36.

Furthermore, when it is necessary for data decoder circuit 36 to transfer read data to main device 41 CPU 1 (see figure 1), it sends the data via bus 40 according to the control of micorocontroller 39.

From the above explanation, according to the invention, CD-ROM playback device 7 is characterized by having a function of controlling at double density the rotation speed of spindle motor 32 and the movement pitch of read head 31 according to physical format information of double density areas Vol. 2 and 3 obtained from specified data stored in single density area Vol. 1. Other functions basically do not differ from the structure of playback devices that play conventional single density disks.

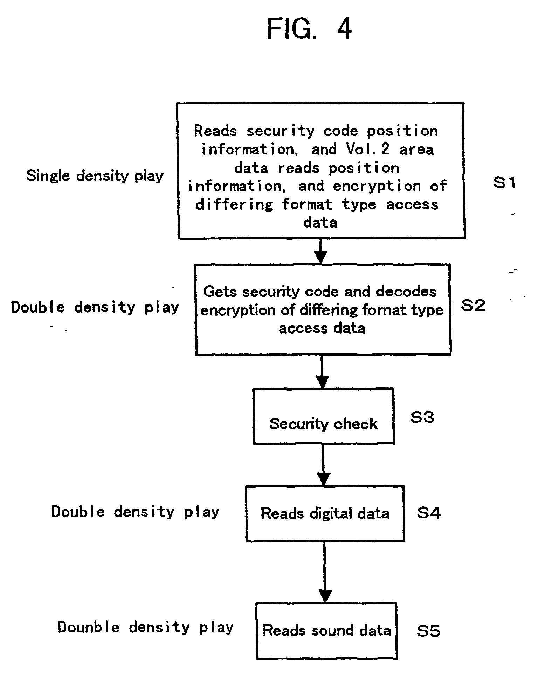

Looking back at figure 2 and at the operation flow shown in figure 4 , we will explain an example of operation using the disk type storage medium of this invention.

In figure 2, when the power supply (not illustrated) is turned on, CPU 1 starts with program stored in ROM 2, and CPU 1 access CD-ROM 30 shown in figure 1, which is placed in CD-ROM playback device 7.

Read of the innermost side of CD-ROM 30 starts with microcontroller 39 (see figure 3) of CD-ROM playback device 7. In other words, TOC of single density-area Vol. 1 is read. Program data ② and sound data ③ are stored in single density area Vol. 1

Therefore, CD-ROM playback device 7 reads program data ② and sound data ③ using single density storage, and CPU 1 executes this program data ② and plays sound data ③ on speaker 6.

Through execution of program data ②, it is possible to show previews and overview of program data ④ stored in double density area Vol. 2.

Encrypted position information (addresses) for accessing physical format information of double density areas Vol. 2 and 3 and program data ④ and sound data ⑤ stored in double density area Vol. 2 is stored in program data ②.

Therefore access to double density areas Vol. 2 and 3 (step S1) is possible through obtaining physical format information and address information of the concerned double density areas Vol. 2 and 3 which are displayed in single density area Vol. 1.

Next, the security code of double density area Vol. 3 is read. The decoding key displayed in double density area Vol. 3 is read, and the aforementioned position information (addresses) of double density area Vol. 2 is decoded (step S2).

Here, a security check is performed (step S3) using the read security code. With a simple security check, a comparison is made with the security code stored in main device ROM 2 (see figure 2). If these,match, CD-ROM 30 is considered to be valid and execution of the programs thereafter is possible.

In other words, digital data ④ is read (step S4) and sound data ⑤ is read (step S5) based on the position information (addresses) in double density area Vol. 2, which was decoded as noted above.

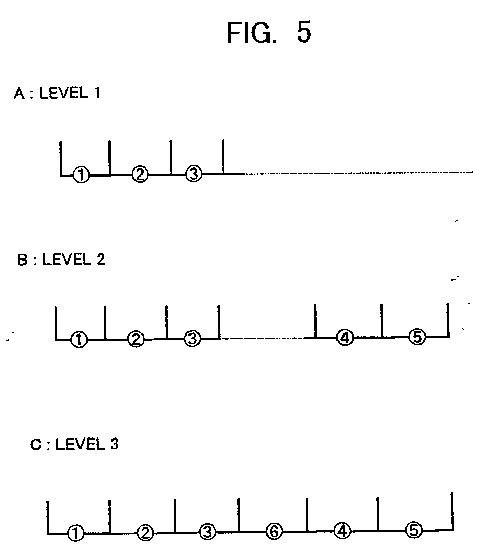

As described above, by preparing a high density storage area in addition to a single density area, it is possible to increase storage capacity for the optical disk type storage medium of this invention. Next, we will explain the security effects of this invention while referring to figure 5.

In figure 5, A: LEVEL 1 is a normal format, in other words, a case when only a single density area is copied. To copy all data which has multiple differing storage densities, a copy function device corresponding to multiple differing storage densities is needed.

Realistically, when the copy function device only corresponds to the conventional single density, as shown in figure 5, of course, only the single storage density format area Vol. 1 is copied. In such a case, the Vol. 3 security code and double density area Vol. 2 which stores the essential program is not copied

With B: LEVEL 1, when single density area Vol. 1 and double density area Vol. 2 are copied separately from different types of CD-ROMs, if there is no security code ⑥ that corresponds to stored data ②, ③, ④, and ⑤, these are not played.

In other words, by relating security code ⑥ to stored data ②, ③, ④, and ⑤, the security check for security code ⑥ is valid for related storage areas ②, ③, ④, and ⑤. Therefore, if there is no security code ⑥ for storage area Vol. 3, access to storage areas ②, ③, ④, and ⑤ is not possible.

With C: LEVEL 3, all areas of a CD-ROM are copied. In this case, the security effect is eliminated. However, as described above, with this invention, there are multiple differing physical formats, e.g. different storage density areas. Thus, it is possible to restrict the opportunity for copying all areas of a CD-ROM.

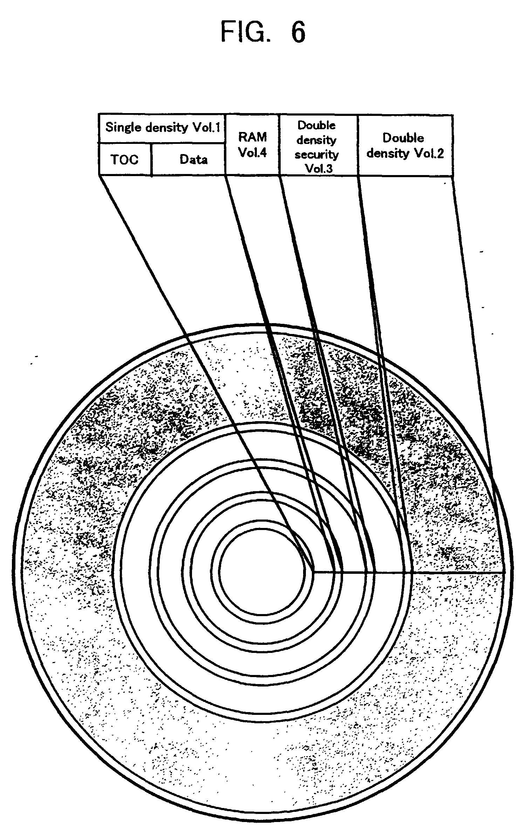

Figure 6 shows a different preferred embodiment of the invention. With this preferred embodiment, compared to the structure shown in figure 1, there is another RAM area Vol. 4 installed. This RAM area Vol. 4 can be constructed according to the principle of the opto-magnetic disk described earlier. RAM area Vol. 4 can be used to hold data such as character data generated during the game process. The rest of the structure of the example shown in figure 6 is the same as that described for figure 1, so we will omit the explanation here.

Here, in the explanation of the aforementioned preferred embodiment, we explained a case of having single density storage areas and areas with greater storage density exclusively for CD-ROM. However, this invention is not limited to this preferred embodiment. As described previously, this invention can also be applied to optical disk type storage media other than CD-ROM. Furthermore, we explained a combination of single density and double density, but this invention is not limited to double density, and single density can be combined with higher density storage density storage areas.

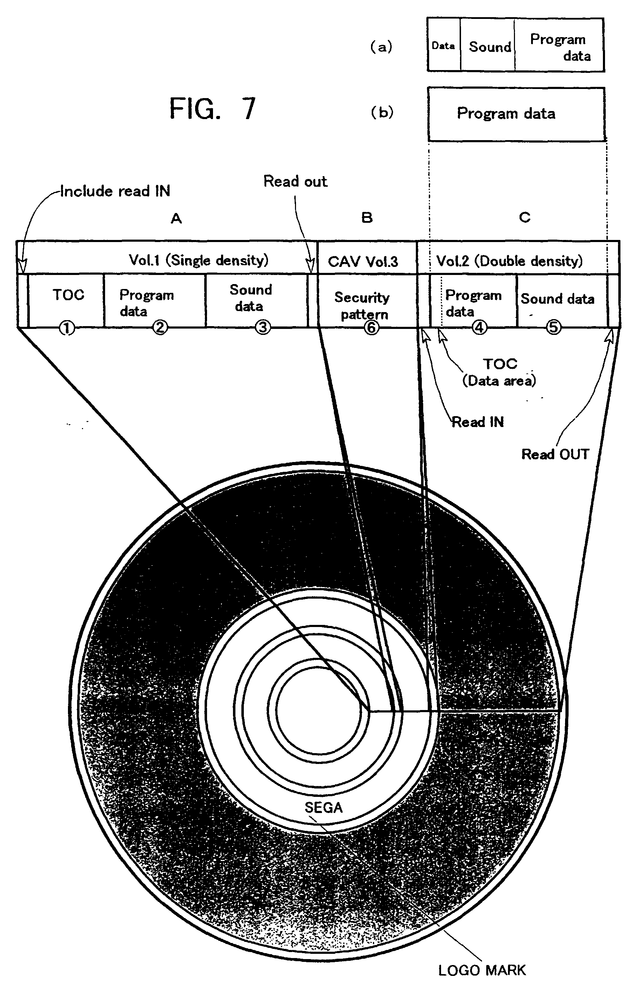

Figure 7 shows another preferred embodiment of this invention which takes into consideration further increase in the security effect and high density data storage.

In figure 7, the fact that the optical disk storage medium has three storage areas Vol. 1, 2, and 3 is the same as the optical disk storage medium of the preferred embodiment shown in figure 1. Specifically, there is a read in and read out part in the innermost and outermost part of single density storage area Vol. 1(area A), respectively, and it is possible to recognize the distinction of single density storage area Vol. 1.

Similarly, there is a read in and read out part in the storage area Vol. 2 innermost and outermost parts, respectively, for making it possible to recognize the distinction of storage area Vol. 2 (area C) which is double density for the preferred embodiment. The TOC of storage area Vol. 2 is in the program data.

Here, with the preferred embodiment of figure 1, double density storage area Vol. 2 is set such that program data ④ and sound data ⑤ are stored so that;program data ④ is on the inside.

Let's assume that all of the three areas Vol. 1 through 3 of the preferred embodiment of figure 1 have the optical disk storage medium rotating at a constant angle velocity, and that the single data physical storage length (unit pit length) is stored at a constant line velocity (CLV). In such a case, the farther toward the outer periphery of the optical disk storage medium is approached, the higher the unit data count (pit count) that can be stored.

Therefore, as a preferred embodiment of this invention, in figure 7, as shown in figure 7(a) and 7(b), data, specifically program data, is made to be stored toward the outside edge. This makes it possible to store more program data.

In other words, figure 7(a) shows an example of storing sound data between program data. Figure 7(b) is an example of storing only Program data in double density area Vol. 2 (area C).

In both figure 7(a) and 7(b), the program data storage areas are located on the outer periphery of the optical disk type storage medium for the above reasons, and it is' possible to store a greater volume of program data. Additionally, when a rotary angle velocity of the optical disk storage medium becomes a constant, the farther toward the outer periphery of the optical disk storage medium is approached, the higher the unit data that can be read out.

In the preferred embodiment shown in figure 7, third area Vol. 3 (area B) stores a logo pattern such as a specified trademark at a constant angle velocity (CAV). In the preferred embodiment, the registered trademark SEGA is visibly displayed.

The applicant of this invention was first to propose visibly storing a concerned specified logo pattern such as a trademark and reading this when a security check is performed and then comparing it with a specified pattern (Japanese patent 587,010).

In other words, as explained by the aforementioned Patent, visibility is possible by aligning and structuring the specified logo pattern such as a trademark so that multiple bits will become the applicable pattern.

Therefore, when the logo pattern is a trademark, if the applicable trademark is not visibly displayed, it is easy to determine that this is not an optical disk type storage medium with a valid program.

Or, if a trademark which is a logo pattern is visibly displayed, but the applicable optical disk type storage medium which stores the program has not received a legitimate license, there is infringement of trademark rights. With such an example, it is possible to curb illegal copying of programs.

The optical disk type storage medium of the invention of this application is characterized by having a structure that makes it difficult to form a logo mark such as a trademark installed for security checks.

With the characteristics of the invention of this application, third storage area Vol. 3 (area B) is installed between storage areas of different storage densities, these being single density storage area Vol. 1 (area A) and double density storage area Vol. 2 (area C) for the preferred embodiment.

Then, a logo pattern such as a specified trademark is stored as a security check pattern in third storage area Vol. 3 (area B) using constant angle velocity (CAV).

Here, constant angle velocity (CAV) and constant line velocity (CLV) are compared. With constant line velocity (CLV), as described previously, a single pit length is fixed, and therefore, the further toward the outer periphery of an optical disk type storage medium, the greater number of pits that can be stored.

On the other hand, with constant angle velocity (CAV), as described previously, the further toward the outer periphery of an optical disk type storage medium, the longer the unit pit length. For example, in a constant angle velocity (CAV) area, the pit length is changed to make the time the same for reading pits on the track of the outermost edge in the radial direction of the optical disk type storage medium and the time for reading the pits on the track of the innermost edge.

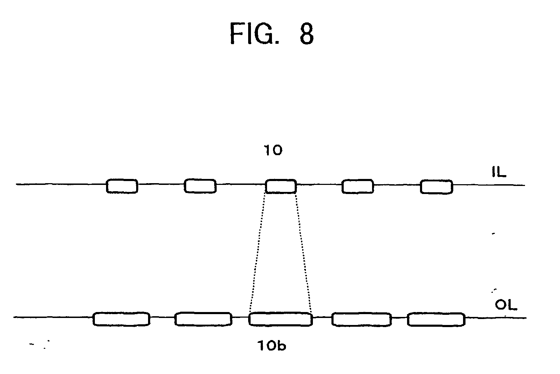

Figure 8 shows pit 10 on track IL of the innermost side of the concerned constant angle velocity (CAV) as well as pit 10b on track OL of the outermost edge. The pit length of pit 10 and pit 10b differs, but when the rotation angle velocity of the optical disk type storage medium is constant, the pit lengths are set so that the read times for these are the same.

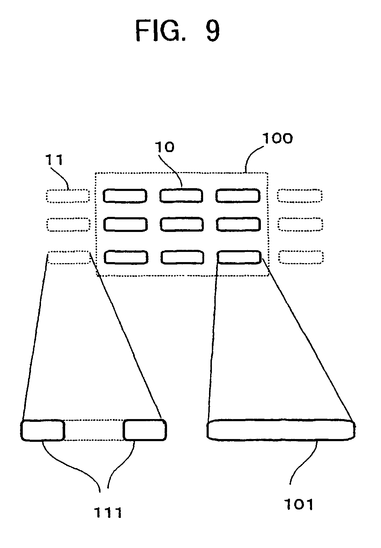

Figure 9 shows a cell that displays a logo mark such as a registered trademark on the third storage area Vol. 3 (area B) using pits stored by the concerned constant angle velocity (CAV).

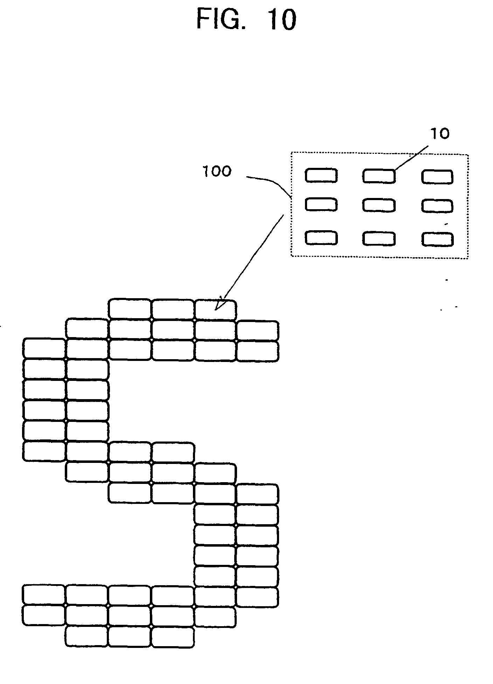

In figure 9, by grouping multiple pits 10, as described using figure 10, one cell 100 is formed when a logo mark is formed by multiple cells.

Also, in figure 9, pit 10 shows logic "1," and pit 11 shows logic "0". Pit 10 of logic "1" is expanded and shown in diagram 101 and pit 11 of logic "0" is expanded and shown in diagram 111. As can be understood from diagram 111, pit 10 of logic "0" is represented by a non-contiguous pit.

Multiple pits 10 of logic "1" shown in figure 9 are grouped to form one cell. Also, a logo mark such as a trademark is formed by multiple cells. Figure 10 uses as an example the character "S" which formed the registered trademark SEGA displayed as a preferred embodiment of third area Vol. 3 in figure 7, and shows an example of the structure of a logo mark using multiple cells.

In figure 10, as a preferred embodiment, one cell 100 is formed by grouping nine logic "1" pits 10. Also, by placing and forming multiple cells 100 in a character pattern, in figure 10, the character "S" is displayed.

In figure 10, the character "S" is formed by multiple cells, and therefore multiple pits, that cross multiple tracks. Thus, of the multiple pits, there are pits placed on the innermost track in the radial direction of the optical disk type storage medium and pits that are placed on the outermost track.

In this case, to make the read speed of each pit constant, these pits on different tracks can be set so that the pit length becomes longer the further outside track in the radial direction of the optical disk type storage medium is approached for the third area Vol. 3 (area B) stored using constant angle velocity.

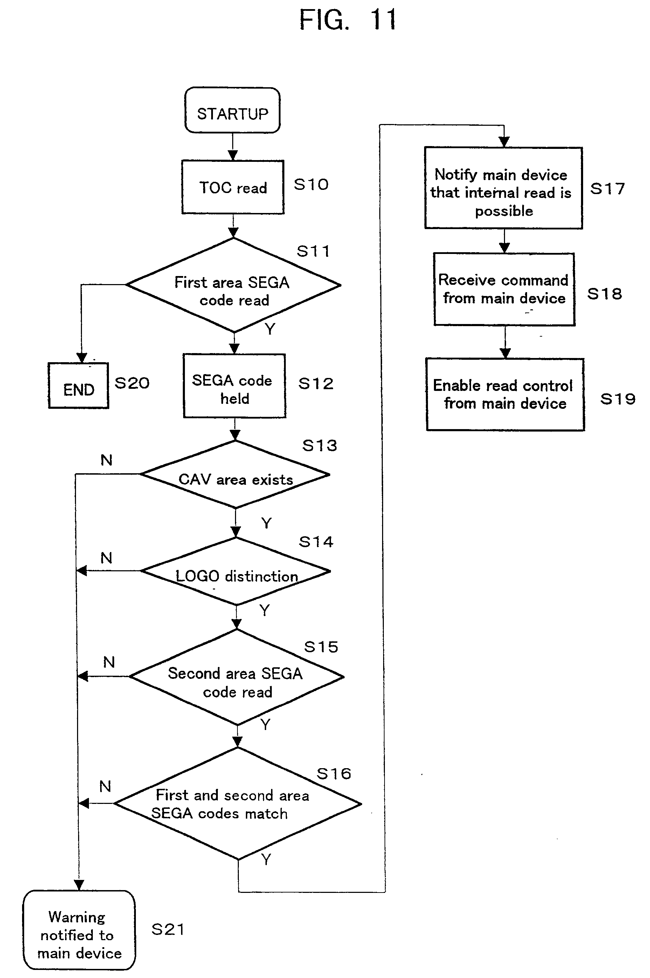

Figure 11 shows the flow of operation of the security check of this invention based on the structure shown in figure 7. The flow of operation shown in figure 11 occurs in data decoder 36 in CD-ROM playback device 7 shown in figure 3. A control program stored in memory, which is not illustrated, is realized by execution by the CPU, which is also not illustrated.

In figure 11, when the power is turned on for CD-ROM playback device 7 or the program is started by a read instruction, read starts from the innermost track of the CD-ROM.

Therefore, the TOC information of single density storage area Vol. 1 is read first (step S10). With this TOC information storage area as the first area, the registered trademark SEGA and media identification information including product number and product code, as the security code are stored here.

If this is an optical disk type storage medium that stores a valid program, the aforementioned registered trademark SEGA can be read, while if this is an optical disk type storage medium with an illegal copy of a program stored or formed to be used for other purposes than game programs, the registered trademark SEGA will be unreadable.

Therefore, it is determined whether the registered trademark SEGA is readable (step S11), and if it is unreadable, processing ends at that point (step S20).

On the other hand, if the product code stored in the first area is readable, this is saved in memory (not illustrated) within data decoder 36 of CD-ROM playback device 7 shown in figure 3(step S12).

Next, it is detected (step S13) if there is a third area Vol. 3 which is the security pattern storage area stored by constant angle velocity (CAV). First, as explained in figure 8, the length of pits 10 and 10b of a specific area on the innermost and outermost tracks of third area Vol. 3 is changed to make the read time of these the same.

Therefore, detection of whether there is a third area Vol. 3 (area B) is performed by comparing the read-time of pits 10 and 10b on specified areas on the innermost and outermost tracks of third area Vol. 3 (area B). As a result of the comparison, if the reading time is the same it is possible to determine that the third area Vol. 3 (area B) stored by constant angle velocity (CAV) exists.

Next, when it is determined that third area Vol. 3 (area B) exists, the security check pattern logo mark stored in this area is read. Then, this is compared with the pattern data stored in advance in memory (not illustrated) in decoder 36 of CD-ROM playback device 7 (step S14).

If the comparison results in a match, the security pattern check of third area Vol. 3 (area B) is considered to be successful.

When the security check pattern check is successful, detection is performed of the existence of storage of the product code as security code stored in the read in area of second area Vol. 2 (area C) stored in double density as a preferred example, and when it is stored, this is read (step S15).

Then, the product code held in read memory from the first area is compared with the product code read from the second area (step S16). If there is a match with this comparison, the security check is cleared.

For the judgments and comparisons up to the aforementioned steps S13 through S16, when there is a rejection judgment, a warning notification is given to main device 41 connected to CD-ROM playback device 7 (step 21). Main device 41 receives the warning notice, and outputs a display stating that the program is not valid according to the security check.

In step 16, when the comparison results in a match, a notification that read is possible is given to main device 41 for CD-ROM playback device 7 (step 17). Thus, a command is sent from main device 41 to CD-ROM playback device 7, and read control from main device 41 is enabled (step 19).

In this way, with the preferred embodiment of this invention shown in figure 10, the security code is stored in a first area and second area of differing storage densities. Then, these are read and compared, and based on whether they match or not, the program is judged to be valid or invalid.

Therefore, it is possible to make it difficult to alter an optical disk type storage medium and clear the security check.

In the preferred embodiment of Fig. 7, the product code recorded as security code in the first and second areas differs in each program title or each optical disk storage medium, which is the same as that of above-described embodiment. That gives higher security.

Also, in the preferred embodiment of this invention, a third storage area using constant angle velocity (CAV) is installed between the first and second areas of differing storage densities. A pattern such as a trademark is formed to be visible in this third storage area. Then, by comparing this pattern with a pattern which has been registered in advance, it is possible to perform a further security check. This makes it possible to prevent illegal copying and modification of programs at a higher level.

### INDUSTRIAL APPLICABILITY

As explained according to the above preferred embodiment, with this invention, it is possible to provide an optical disk type storage medium with increased storage capacity, and to provide an optical disk type storage medium with increased security assurance.

## Claims

1. An optical disk type storage medium characterized by having multiple physical format areas in the radial direction, and
by having the physical format of another physical format area be different from the physical format of at least the innermost physical format area.

2. The optical disk type storage medium according to claim 1, wherein:
said physical format is storage density, the storage density of the innermost physical format area being single density; and
other physical format areas have storage densities larger than said single density.

3. The optical disk type storage medium according to claim 1 or 2, wherein:
security data is stored in the third physical format area that exists between the innermost physical format area and the outermost physical format area.

4. The optical disk type storage medium according to claim 3, wherein:
security data stored in said third physical format area is related to the storage data of the innermost physical format area and the storage data of the outermost physical format area.

5. The optical disk type storage medium according to claim 3, wherein:
said third physical format area is positioned adjacent to said innermost physical format area, encrypting and storing track information for accessing other physical format areas is encrypted and stored in said innermost physical format area; and
key information for decoding said encryption is stored in said third physical format area.

6. The optical disk type storage medium according to claim 1 or 2, wherein:
at least one physical format area other than the outermost physical format area of said multiple physical format areas is a storage area for which write and read are possible.

7. The optical disk type storage medium according to claim 6, wherein:
said storage area for which write and read are possible is constructed by an opto-magnetic storage memory medium.

8. An optical disk type storage medium characterized by a first storage area and second storage area each of which has a different storage density,
having a third storage area between said first storage area and second storage area, with storage performed at a constant line velocity for said first storage area and second storage area, and
with storage performed at a constant angle velocity for said third storage area.

9. The optical disk type storage medium according to claim 8, wherein:
said second storage area is placed in the outermost periphery in a radial direction; and
program data is stored in at least the outermost area of said second storage area.

10. The optical disk type storage medium according to claim 8, characterized by being set so that the bit length on the outermost track in the radial direction of said third storage area and the bit length on the innermost track in the radial direction of said third storage area to have the same read time for each.

11. The optical disk type storage medium according to claim 8, wherein:
said first storage area is placed in the innermost side in the radial direction;
said second storage area is placed in the outermost side in the radial direction; and
the storage density of the second storage area is larger than the storage density of said first storage area.

12. The optical disk type storage medium according to claim 8, characterized by having the same security code stored in said first storage area and said second storage area.

13. The optical disk type storage medium according to claim 8, wherein:
said third storage area has multiple logic "1" pit visible patterns formed.

14. The optical disk type storage medium according to claim 13, wherein:
said visible pattern is composed of trademarks.
